# NEUE EUROPÄISCHE PATENTSCHRIFT

(11) **EP 1 631 014 B2**
(45) Veröffentlichungstag und Bekanntmachung des Hinweises auf die Entscheidung über den Einspruch: **16.08.2017**
(45) Hinweis auf die Patenterteilung: 21.11.2007
(21) Anmeldenummer: 05016849.1
(22) Anmeldetag: 03.08.2005
(51) Int. Cl.: H04L 12/40

(54) **Verfahren und Vorrichtung zur Busankopplung sicherheitsrelevanter Prozesse**
Method and device for coupling critical processes to a bus
Procédé et dispositif pour coupler des procédés critiques à un bus

(30) Priorität: 17.08.2004 DE 102004039932
(43) Veröffentlichungstag der Anmeldung: 01.03.2006
(73) Patentinhaber: Phoenix Contact GmbH & Co. KG, 32825 Blomberg (DE)
(72) Erfinder: Landwehr, Heinz-Carsten, Dipl.-Ing., 32657 Lemgo (DE); Oster, Viktor, Dipl.-Ing., 32825 Blomberg (DE); Esch, Rainer, Dipl.-Ing., 32825 Blomberg (DE)
(74) Vertreter: Blumbach Zinngrebe

(56) Entgegenhaltungen:
- EP-A- 1 439 657
- DE-A1- 10 037 737
- DE-A1- 10 065 907
- DE-A1- 19 920 299
- US-A1- 2003 167 432

## Beschreibung

Die Erfindung betrifft ein Verfahren sowie eine zur Durchführung des Verfahrens angepasste Vorrichtung zur einkanaligen Busankopplung sicherheitsrelevanter Prozesse.

Unter einem sicherheitsrelevanten Prozess wird nachfolgend ein Prozess verstanden, von dem bei Auftreten eines Fehlers eine nicht zu vernachlässigende Gefahr für Menschen und/oder auch materielle Güter ausgeht. Bei einem sicherheitsrelevanten Prozess muss daher mit im Idealfall 100-prozentiger Sicherheit gewährleistet sein, dass bei Vorliegen eines Fehlers dieser Prozess, ein mit diesem Prozess gekoppelter Folgeprozess und/oder ein diesen Prozess umfassendes Gesamtsystem in einen sicheren Zustand überführt wird. Derartige sicherheitsrelevante Prozesse können somit auch Teilprozesse von größeren, übergeordneten Gesamtprozessen sein. Beispiele für sicherheitsrelevante Prozesse sind chemische Verfahren, bei denen kritische Parameter unbedingt in einem vorgegebenen Bereich gehalten werden müssen, komplexe Maschinensteuerungen, wie etwa bei einer hydraulischen Presse oder einer Fertigungsstraße, bei welchen beispielsweise das Inbetriebnehmen eines Press-/Schneidwerkzeuges einen sicherheitsrelevanten Teilprozess darstellen kann. Weitere Beispiele für sicherheitsrelevante (Teil-) Prozesse sind die Überwachung von Schutzgittern, Schutztüren oder Lichtschranken, die Steuerung von Zweihandschaltern oder auch die Reaktion auf Notausschalter.

Für alle sicherheitsrelevanten Prozesse ist es somit unbedingt erforderlich, dass die jeweils zugehörigen, erzeugten oder erfassten bzw. gemessenen, sicherheitsrelevanten Daten ohne irgendeine Verfälschung zeitnah transportiert werden, da jede Verfälschung eine fehlerhafte Funktion und/oder Reaktion zur Folge haben kann, die in letzter Konsequenz das Leben und die Gesundheit von Personen gefährden kann.

Um den Sicherheitsanforderungen gerecht zu werden, hat es in den letzten Jahren zahlreiche Vereinbarungen gegeben, die einen nahezu fehlerfreien Datentransport beim Einsatz von Bussystemen fordern. Diese betreffen insbesondere den Datentransport selbst sowie eine zulässige Restfehlerwahrscheinlichkeit in Abhängigkeit der jeweiligen Anwendung bzw. des jeweiligen Prozesses. Als einschlägige Standards sind hierbei insbesondere die EN 61508 und die EN 954-1 zu nennen sowie die Grundsätze für die Prüfung und Zertifizierung von "Bussystemen für die Übertragung sicherheitsrelevanter Nachrichten" der Prüf- und Zertifizierungsstelle der gewerblichen Berufsgenossenschaften.

Entsprechend dieser Vereinbarungen und Normen sind sicherheitsgerichtete Bussysteme entwickelt worden, die Daten mit hoher Redundanz übertragen. Mögliche Fehler werden rechtzeitig entdeckt und eine Gefährdung kann abgewendet werden. Beispiele hierfür sind unter anderem der Safety Bus P, Profibus F, Interbus Safety, u.a.

Nachteilig hierbei ist jedoch, dass für den Einsatz sicherheitsgerichteter Bussysteme bereits installierte Bussysteme ersetzt werden müssen und häufig Einschränkungen bei der Anzahl der Teilnehmer, bei der Datentransportrate oder beim Datenprotokoll in Kauf genommen werden müssen.

Als Folge sind sicherheitsgerichtete Verfahren und/oder Komponenten entwickelt worden, die eine einfachere und kostengünstigere Nachrüstung bereits existierender Bussysteme ermöglichen. Insbesondere bei der Steuerungs- und Automatisierungstechnik verwendete elektronische Sicherungsverfahren nutzen hierbei zur Übertragung sicherheitsrelevanter Daten, insbesondere zwischen Sensoren, Aktoren und/oder Steuerungseinrichtungen, die zwischen den einzelnen an einem Prozess beteiligten Einheiten bereits eingesetzten (Feld-) Bussysteme zur Datenkommunikation.

Die EP 1 188 096 B1 offenbart beispielsweise ein Steuerungssystem für einen sicherheitsrelevanten Prozesse mit einem Feldbus, über den eine Steuereinheit zum Steuern des sicherheitsrelevanten Prozesses und eine Signaleinheit, die über E/A-Kanäle mit dem sicherheitsrelevanten Prozess verknüpft ist, verbunden sind. Um eine fehlersichere Kommunikation miteinander zu gewährleisten weisen diese Einheiten sicherheitsbezogene Einrichtungen auf, durch welche an sich nicht sichere Einheiten zu sicheren Einheiten werden sollen. Im Einzelnen sind jeweils zumindest zwei redundante Verarbeitungskanäle der art vorgesehen, dass ein Fehler in einem der Verarbeitungskanäle anhand eines Ergebnisses, welches von demjenigen eines anderen der redundanten Verarbeitungskanals abweicht, erkannt und gegebenenfalls korrigiert werden kann. Diese mehrkanalige Struktur wird insbesondere durch zwei redundante Rechner realisiert, wobei die Sicherheitsbetrachtung nach den beiden redundanten Rechnern endet und die Betrachtung für ein sicheres Datenprotokoll ab dieser Stelle ohne weitere Ausführungen zum Tragen kommt.

Unter dem allgemeinen Begriff Rechner sind nachfolgend im Wesentlichen jede Art von Datenverarbeitungseinrichtungen wie Mikro-Computer, Mikro-Prozessoren, Mikro-Controller oder auch PC's, zu verstehen.

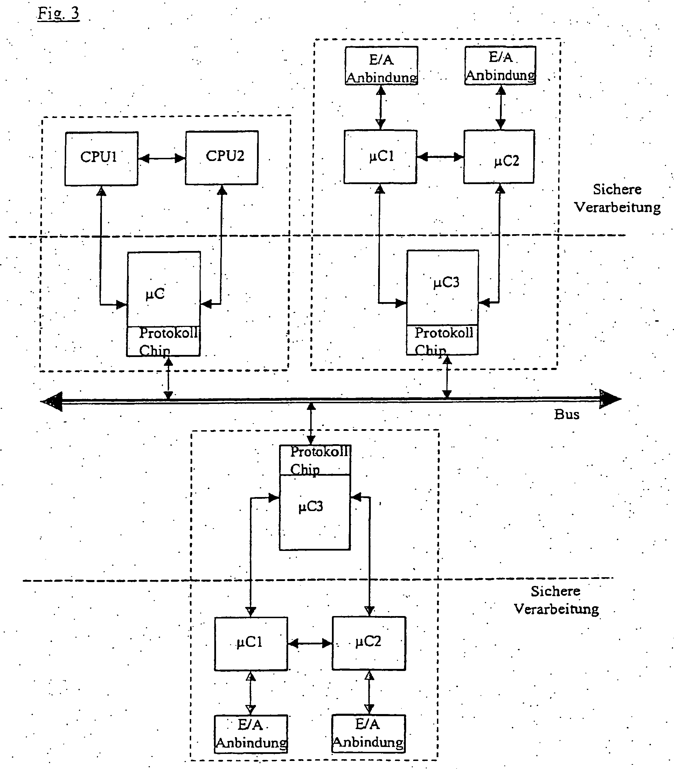

Auch die WO 01/24385 A2 betrifft die Steuerung sicherheitsrelevanter Prozesse unter Verwendung von (Feld-) Bussystemen, wobei die an der Steuerung des sicherheitsrelevanten Prozesses beteiligten Einheiten wiederum in der Regel redundant aufgebaute Verarbeitungskanäle aufweisen. Jeder der redundanten Kanäle umfasst einen Rechner, die sich gegenseitig kontrollieren. Diese mehrkanalige Struktur wird über einen weiteren mit dem Feldbus verbunden Rechner in eine einkanalige Struktur überführt (Fig. 3). Weitergehende Ausführungen einschließlich des Übergangs von der Mehrkanaligkeit zur Einkanaligkeit sind der Schrift nicht zu entnehmen.

Der WO 01/24391 A1 und der Offenlegungsschrift DE 199 39 567 A1 sind weitere Beispiele sicherer Busteilnehmer mit sich gegenseitig hinsichtlich einer sicheren Protokollerstellung kontrollierenden, redundant ausgeführten Verarbeitungskanälen und/oder Rechner und anschließendem Übergang von der Zweikanaligkeit zur Einkanaligkeit über einen weiteren an den Bus gekoppelten Rechner, der an einen Protokoll-Chip angeschlossen ist oder diesen integriert hat, zu entnehmen. Auch hier endet die Sicherheitsbetrachtung ohne die Offenbarung weiterer technischer Maßnahmen nach den beiden redundanten Rechner und die Betrachtung für ein sicheres Datenprotokoll kommt ab dieser Stelle zum Tragen.

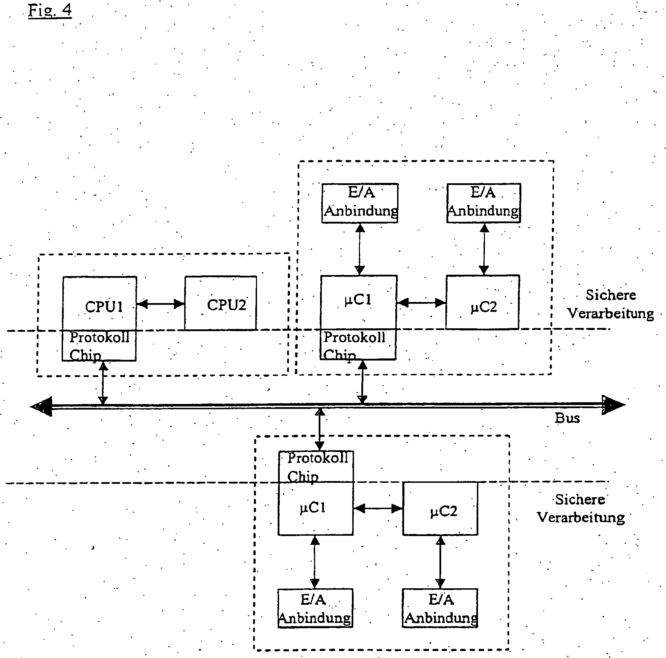

Die eine Einrichtung zur einkanaligen Übertragung von mittels zwei redundanten Rechnern gebildeten Daten betreffende Patentschrift DE 195 32 639 C2 integriert, um den Schaltungsaufwand zu verringern, die Funktion der Busankopplung in einen der beiden redundant ausgeführten Rechner. Lediglich der die Busankopplungsfunktionalität aufweisende Rechner weist somit einen Ausgabekanal auf, welchem von diesem Rechner stammende Nutzdaten und vom anderen Rechner stammende Prüfdaten zugeführt werden oder umgekehrt oder Nutz- und Prüfdaten beider Rechner ineinander verschachtelt zugeführt werden (Fig. 4). Um jedoch zu gewährleisten, dass der Rechner, der den Bus bedient, nicht in der Lage ist, Telegramme zu erzeugen, die der andere Rechner nicht beeinflussen kann, ist bei der Umsetzung ein erhöhter Aufwand bei der Sicherheitsbetrachtung erforderlich, da zum einen die Rückwirkungsfreiheit und zum anderen die Unabhängigkeit der Rechner zur Erstellung des sicheren Protokolls nachgewiesen werden muss. Die Patentschrift schlägt hierzu lediglich eine entsprechende Beschaltung bzw. Nichtbeschaltung der jeweiligen Rechnerausgänge vor.

Ferner beschreibt die DE 100 65 907 A1 ein auf dem Prinzip einer "Redundanz mit Kreuzvergleich" beruhendes Verfahren zum gesicherten Datentransport für die Datenübertragung an parallelen oder seriellen Netzwerken oder Bussystemen, wobei ein Zwischenregister mit zwei logisch identischen Datenbereichen für den Übergang von der Zweikanaligkeit zur Einkanaligkeit verwendet wird. Die vollständige, einkanalig über das Bussystem zu übertragende, sicherheitsgerichtete Nachricht umfasst die Dateninhalte beider Datenbereiche des Zwischenregisters. Dem Zwischenregister auf Senderseite vorgeschaltet sind wiederum zwei redundant arbeitende Rechner, die je nach Art der Applikation einkanalig oder zweikanalig zur Verfügung gestellte sicherheitsrelevante Daten jeweils mit redundanter Information zu sicheren Daten aufbereiteten und diese gegenseitig zur Überprüfung austauschen. Sofern beide zum gleichen Ergebnis gelangt sind, übergibt jeder der Rechner seine sicheren Daten dem Zwischenregister, wobei jeder Datenbereich mit den sicheren Daten jeweils eines Rechners belegt wird, die ihrerseits bereits redundante Information zur Fehlererkennung enthalten. Ist in einer alternativen Ausführungsform das Zwischenregister in einem der beiden Rechner enthalten, so dass dieser eine Rechner folglich beide Datenbereiche des Zwischenregisters nach Abstimmung mit dem zweiten Rechner entsprechend belegt, liest dieser zweite Rechner zur Kontrolle das Zwischenregister mit den beiden Datenbereichen nochmals aus. Je nach Applikation kann der Dateninhalt eines der beiden Datenbereiche des Zwischenregisters auch invertierte Daten oder andere zusätzliche Verschachtelungen aufweisen, um beispielsweise systematische Fehler in den Sendern, Empfängern und/oder anderen die Daten weiterleitenden Einheiten zu erkennen. Nachteilig hierbei ist somit insbesondere, dass die Gesamtdatenlänge der sicherheitsgerichteten Nachricht in Bezug auf die tatsächlichen Nutzdaten überaus groß ist und die Datenübertragungsrate in Bezug auf die tatsächlichen Nutzdaten somit klein ist, da für jeden zu übertragenden Nutzdatensatz zwei identische Nutzdatensätze sowie eine jeweilige redundante Information zu jedem der identischen Nutzdatensätze zu übertragen ist. Bei abnehmender Anzahl von zu übertragenden Nutzdaten je Datenpaket, wie dieses beispielsweise beim Interbus gegeben ist, verschlechtert sich das Verhältnis von Nutzdatenlänge zur Gesamtdatenlänge zunehmend.

Eine Aufgabe der Erfindung ist es somit, für die sichere Busankopplung von sicherheitsrelevanten Prozessen einen weiteren, neuen und verbesserten Weg für den Übergang von der Mehrkanaligkeit zur Einkanaligkeit bereit zu stellen und auf eine einfach zu realisierende Weise, insbesondere auch einfach zu testende Weise, eine Rückwirkungsfreiheit und Unabhängigkeit bei der Erstellung eines sicherheitsgerichteten Protokolls, welches als Sicherheitstelegramm über einen Bus übertragen werden soll, sicher zu stellen.

Die erfindungsgemäße Lösung ist auf höchst überraschende Weise bereits durch einen Gegenstand mit den Merkmalen eines der anhängigen unabhängigen Ansprüche gegeben.

Vorteilhafte und/oder bevorzugte Ausführungsformen und Weiterbildungen sind Gegenstand der jeweiligen abhängigen Ansprüche.

Erfindungsgemäß ist somit zur einkanaligen Busankopplung eines sicherheitskritischen Prozesses ein Verfahren vorgesehen, bei welchem ein für den sicherheitskritischen Prozess relevanter Datensatz über zumindest zwei redundante Verarbeitungskanäle, protokollspezifisch, nach identischen Gesetzmäßigkeiten zu jeweils einem sicherheitsgerichteten Protokoll verarbeitet wird und die redundanten sicherheitsgerichteten Protokolle zur einkanaligen Busankopplung wieder zu einem gemeinsamen sicherheitsgerichteten Protokoll zusammengesetzt werden, und zwar indem von jedem der Verarbeitungskanäle auf ein gemeinsames Zwischenregister zugegriffen wird, wobei für jede Registerstelle eine Schreibberechtigung nur einmal vergeben wird, derart dass das gemeinsame sicherheitsgerichtete Protokoll, also das zu übertragende Sicherheitstelegramm, anteilig durch Einschreiben jeweils unterschiedlicher Anteile der jeweiligen sicherheitsgerichteten Protokolle zusammengesetzt wird.

Ein wesentlicher Vorteil ist hierbei folglich, dass zum einen beide Verarbeitungskanäle in der Lage sind, das komplette sicherheitsgerichtete Protokoll zu berechnen, so dass dieses sich positiv auf die benötigte Telegrammlänge auswirkt, da alle Datenbits mit den unterschiedlichen Sicherungsmechanismen bereits in den redundanten Verarbeitungskanälen vorbekannt sind und keine zusätzlichen Datenbits übertragen werden müssen, die auf der Empfängerseite den Rückschluss auf die einwandfreie Berechnung zulassen. Darüber hinaus ist gewährleistet, dass ein Verarbeitungskanal alleine nicht in der Lage ist, ein Sicherheitstelegramm zu senden, wobei die Steuerung über die jeweils nur einmal vergebbare Schreibberechtigung von Daten in einer Registerstelle eine einfach zu implementierende und hoch effiziente Möglichkeit darstellt, um unabhängig vom verwendeten Bus(system) eine kostengünstige wesentlich erhöhte Sicherheit zu gewährleisten.

Die Realisierung einer intelligenten Einheit zum Durchführen des erfindungsgemäßen Verfahrens ist somit bereits durch Verwendung einer wenigstens zwei redundante Rechner umfassende Vorrichtung gewährleistbar, bei welcher die Rechner zum Verarbeiten eines identischen Eingangsdatensatzes unter Anwendung identischer Gesetzmäßigkeiten zu jeweils einem sicherheitsgerichteten Protokoll ausgebildet sind und die über eine Schaltungsanordnung mit einem gemeinsamen Zwischenregister derart verbunden sind, dass zur gemeinsamen Bildung eines weiteren identischen, gemeinsamen sicheren Protokolls für jede Registerstelle des Zwischenregisters eine Schreibzugriff nur für jeweils einen der Rechner gegeben ist. Die Erfindung ermöglicht somit bereits durch Verwendung von Standardkomponenten und unabhängig vom jeweiligen Bussystem eine einfach zu implementierende hoch dynamische und hoch effiziente Lösung zur rückwirkungsfreien und unabhängigen Bildung eines jeweiligen sicherheitsgerichteten Protokolls.

Die spezifischen Verarbeitungsregeln zur Bildung des Sicherheitstelegramms sind hierbei zweckmäßiger geeignet, den jeweiligen Sicherheitsanforderungen zu genügen, insbesondere den Sicherheitsanforderungen für eine einfache Übertragung gemäß SIL 3 IEC 61508.

Bei Verwendung einer derartigen Vorrichtung ist die Schaltungsanordnung in zweckmäßiger Weise derart ausgebildet, dass jeder der Rechner auf jede Registerstelle des Zwischenregisters lesend zugreifen kann.

Hierdurch ist einfach und kostengünstig mit StandardKomponenten in bevorzugter Weiterbildung ferner gewährleistbar, dass vor einer Übergabe des gemeinsamen sicherheitsgerichteten Protokolls aus dem Zwischenregister an den Bus zur Übertragung von jedem der redundanten Verarbeitungskanäle auf jede Registerstelle lesend zurückgegriffen werden kann, um eine Verifikation des gemeinsam gebildeten sicherheitsgerichteten Protokolls durchführen. Durch den hierdurch möglichen zusätzlichen Vergleich des gemeinsam gebildeten sicherheitsgerichteten Protokolls mit dem jeweils separat bzw. individuell über die Verarbeitungskanäle gebildeten sicherheitsgerichteten Protokoll wird die erreichte Sicherheit nochmalig wesentlich erhöht. Beim Ausfall oder Fehler eines Rechners kann folglich kein vollständiges Sicherheitstelegramm erzeugt werden, so dass zwangsläufig auch Fehler erkannt und eine sicherheitsgerichtete Funktion auslösbar ist.

Eine darüber hinausgehende, weitere Steigerung der Sicherheit ist ferner dadurch gewährleistbar, wenn in besonders bevorzugter Ausführung vor dem Schreiben des gemeinsamen sicherheitsgerichteten Protokolls die redundant gebildeten sicherheitsgerichteten Protokolle durch die Verarbeitungskanäle zunächst auf gegenseitige Identität hin überprüft, so dass die Bildung eines gemeinsamen sicherheitsgerichteten Protokolls erst unter Ansprechen auf identische, unabhängig voneinander aus einem identischen Eingangsdatensatz verarbeitete sicherheitsgerichteten Protokolle erfolgt. Tritt bereits bei der redundanten Verarbeitung ein Fehler auf, wird dieser somit noch frühzeitiger erkannt und der Prozess kann noch frühzeitiger in einen sicheren Zustand gefahren werden.

Die an und für sich gegenseitig entkoppelten Rechner sind somit bevorzugt über eine Kommunikationsschnittstelle mit einander verbunden.

Vorteilhaft ist es ferner, eine jeweilige, definiert jeweils einem Verarbeitungskanal zugewiesene Schreibberechtung zur Verifikation mittels einer Testprozedur zu überprüfen. Auch hierzu der vollumfängliche Lesezugriff für jede Registerstelle zweckmäßig.

Gemäß einer bevorzugten Testprozedur wird hierbei über jeden der Verarbeitungskanäle versucht, einen jeweils unterschiedlichen, spezifisch zugeordneten Defaultwert in alle Registerstellen des Zwischenregisters einzuschreiben. Anschließend liest jeder der Verarbeitungskanäle alle Registerstellen des Zwischenregisters aus und verifiziert die Inhalte der Registerstellen auf eine eindeutige Verschachtelung hin.

Eine solche Testprozedur wird zweckmäßiger Weise mehrmalig und/oder durch ein abwechselndes Einschreiben in die und Auslesen der Registerstellen über unterschiedliche Verarbeitungskanäle durchgeführt.

Im Wesentlichen jede durch die Kopplung der an das Zwischenregister zu übergebenen anteiligen Daten an bestimmte Positionen oder Adressen innerhalb des gemeinsamen sicherheitsgerichteten Protokolls bzw. des Zwischenregisters eingestellte Sicherheitsübergabe-/-übernahmeregel lässt sich folglich einfach testen und jeder Fehler bei der Bildung eines zu übertragenen Sicherheitstelegramms, einschließlich aufgrund eines Rechnerausfalls, kann somit sicher erkannt werden.

Insbesondere, um nach einer jeweils protokollspezifischen Verarbeitung der Eingangsdaten zu einem sicherheitsgerichteten Protokoll deren Speicherung und protokollspezifische Übergabe an den Bus zu gewährleisten, wobei das sicherheitsgerichteten Protokoll den auf der jeweiligen Anwendung basierten Vorgaben, insbesondere in Abhängigkeit des Busses und/oder der Prozesse, an einen sicheren Protokolldatensatz genügt, umfasst ein Rechner gemäß einer Ausführungsform jeweils einen integrierten Protokollchip. In alternativer Ausbildung kann der Protokollchip auch ausgangseitig an einen Rechner angeschaltet sein. Zur Vermeidung derartiger, integrierter oder nachgeschalteter, Protokollchips und folglich auch zur Bauteil- und Kostenreduzierung ist in weiterer, besonders zweckmäßiger Ausführung vorgeschlagen, den Rechner mit einer zur Verarbeitung und protokollspezifischen Übergabe der Daten entsprechend ausgebildeten Software bereitzustellen.

Die erfindungsgemäße Vorrichtung kann als Busteilnehmereinheit ausgebildet sein, wobei die Rechner hierzu zweckmäßiger Weise eingangsseitig wenigstens mit Eingangskanälen zur ein- oder mehrkanaligen Anbindung von Prozessdaten-Eingabeeinheiten und entsprechend zur ein- oder mehrkanaligen Erfassung von zu verarbeitenden sicherheitsrelevanten Eingangsdaten verschaltet sind oder als Bus-Steuerungseinheit, welche z.B. die zu verarbeitenden sicherheitsrelevanten Eingangsdaten generiert, ausgebildet ist. Die Rechner sind somit insbesondere als Mikro-Controller oder als zentrale Prozesseinheiten (CPUs) ausgebildet.

Die Schaltungsanordnung zur erfindungsgemäßen Anbindung der Rechner oder gegebenenfalls der den Rechnern nachgeschalteten Protokollchips ist bei einer bevorzugten Ausführungsform als einfache Logikschaltung ausgebildet, wobei auch hochintegrierte Schaltkreise, z.B. in Form eines FPGA (Field Programmable Gate Array), verwendbar sind und applikationsspezifisch von zusätzlichem Vorteil sein können.

Das Zwischenregister weist eine Schnittstelle auf, über welche das dort hinterlegte gemeinsame sicherheitsgerichteten Protokoll einkanalig direkt in den Bus, z.B. einen Interbus, einkoppelbar ist oder einkanalig an eine anwendungsspezifisch ausgebildete weitere vor den Bus geschaltete Busankopplungseinrichtung übergeben werden kann, wobei als Busankopplungseinrichtung applikationsspezifisch insbesondere ein weiterer Protokollchip, ein weiterer Mikro-Controller oder eine sonstige intelligente Einheit verwendet sein kann.

Als Zwischenregister ist somit bereits ein Standard-RAM ausreichend. In bevorzugter Weiterbildung ist jedoch insbesondere vorgesehen, das Zwischenregister bzw. den Zwischenspeicher in Form eines Dualportmemory (DPM) auszubilden, so dass auf einfachste und kostengünstige Weise über einen der beiden Schnittstellen-Ports die Rechner anschaltbar sind und über den zweiten Schnittstellen-Port die einkanalige Ankopplung an den Bus erfolgen kann.

Weitere Merkmale und Vorteile der Erfindung werden aus der nachfolgenden, detaillierten Beschreibung einer bevorzugten, jedoch lediglich beispielhaften Ausführungsform der Erfindung unter Bezugnahme auf die beigefügten Zeichnungen ersichtlich.

In den Zeichnungen zeigen:
- Fig. 1: eine schematische Prinzipskizze zur redundanten Bildung von sicherheitsgerichteten Protokollen für ein zu übertragendes Sicherheitstelegramm mittels redundanter Verarbeitungskanäle und anschließender gemeinsamer Bildung eines identischen sicherheitsgerichteten Protokolls unter Steuerung einer Übergabe-/Übernahmeregel betreffend die aus den sicherheitsgerichteten Protokollen jeweils zu übergebenden/übernehmenden Anteile;
- Fig. 2: ein mögliches Funktionsschaltbild einer Umsetzung der Erfindung, basierend auf zwei jeweils das vollständige, sicherheitsgerichtete Protokoll redundant berechnenden Mikro-Controllern, und
- Fig. 3 u. 4: bekannte Realisierungen für den Übergang von der Zweikanaligkeit zur Einkanaligkeit.

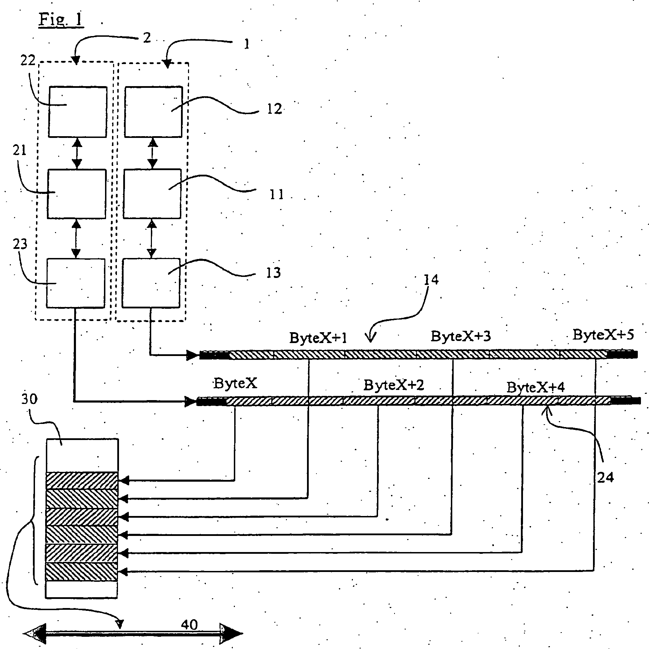

Bei Figur 1 dargestellt sind zwei redundante Verarbeitungskanäle 1 und 2 einer nicht näher dargestellten Busteilnehmereinheit oder Bus-Steuerungseinheit zur Ankopplung eines sicherheitskritischen Prozesses an einen Bus 40, z.B. einen Interbus. Im Fall einer Busteilnehmereinheit ist jeder der Verarbeitungskanäle mit, dem sicherheitskritischen Prozess zugeordneten, gleichermaßen nicht dargestellten Ein-/Ausgabeeinheiten, wie z.B. Sensoren und/oder Aktoren, verbunden.

Einer Busteilnehmereinheit mit sensor-seitiger Applikation werden somit je nach Art der spezifischen Anbindung einkanalig oder zweikanalig den Verarbeitungskanälen 1 und 2 identische, für den sicherheitskritischen Prozess relevante Eingangsdaten zur Verfügung gestellt und zweckmäßigerweise zunächst in Speicher 12 bzw. 22 zur weiteren Verarbeitung abgelegt. Insbesondere im Fall einer Bus-Steuerungseinheit befinden sich zu sicheren Daten vor einer Busübertragung aufzubereitende sicherheitsrelevante Eingangsdaten in Speichern 12 bzw. 22.

Die Eingangsdaten werden zunächst vor der Übertragung eines Sicherheitstelegramms über den Bus 40 redundant unter Anwendung gleicher Gesetzmäßigkeiten zu jeweils einem sicherheitsgerichteten Protokoll 14 und 24 verarbeitet. Die Verarbeitungskanäle umfassen hierzu jeweils einen Mikro-Controller 11 bzw. 21 zur jeweiligen Aufbereitung/Verarbeitung der in dem Speicher 12 oder 22 befindlichen sicherheitsrelevanten Eingangsdaten zu einem sicherheitsgerichteten Protokoll 14 bzw. 24 sowie bei der Ausführung gemäß Fig. 1 jeweils einen dem Mikro-Controller 11 oder 21 nachgeschalteten Protokollchip 13 bzw. 23, der das von dem jeweiligen Mikro-Controller 11 oder 21 berechnete, sicherheitsgerichteten Protokoll 14 bzw. 24 zur weiteren Übergabe an den Bus 40 erhält. In alternativer Ausführung zu den dargestellten Protokollchips 13 bzw. 23 können die Mikro-Controller 11 und 21 auch eine entsprechend ausgebildete Software umfassen, so dass die weitere, nachfolgend beschriebene Übergabe der berechneten Protokolle 14 und 24 an den Bus 40 durch die Mikro-Controller 11 und 21 erfolgt.

Die berechneten, sicheren bzw. sicherheitsgerichteten Protokolle 14 und 24 sind folglich, sofern bei der Berechnung kein Fehler oder Ausfall aufgetreten ist, identisch. Es sei darauf hingewiesen, dass die sicheren Protokolle hierbei selbstverständlich so aufgebaut sind, dass diese den Anforderungen der Norm an eine sicherheitsgerichtete Übertragung genügen.

Zur weiteren Erhöhung der Sicherheit ist erfindungsgemäß vor Übertragung eines sicheren Telegramms über den Bus 40 die gemeinsame Bildung eines weiteren identischen, gemeinsamen sicherheitsgerichteten Protokolls vorgesehen, der anschließend einkanalig an den Bus 40 zur Übertragung übergeben werden kann.

Dieses gemeinsame sicherheitsgerichtete Protokoll wird durch ein anteiliges Zusammensetzen von Daten des sicheren Protokolls 14 und von Daten des sicheren Protokolls 24 in einem Zwischenspeicher oder Zwischenregister 30 gebildet, auf den jeder der Verarbeitungskanäle 1 und 2 zugreifen kann.

Um zu verhindern, dass dieses gemeinsam zu bildende sicherheitsgerichtete Protokoll lediglich auf Daten aus nur einem der Verarbeitungskanäle 1 oder 2 basiert, welches folglich dem Senden eines Sicherheitstelegramms nur durch einen der Mikro-Controller 11 oder 21 gleichkäme, z.B. aufgrund eines auftretenden Ausfalles eines der beiden Mikro-Controller, steuert eine definierte oder definierbare Zugriffsregel die Schreibrechte auf dem Zwischenspeicher 30. Die Zugriffsregel bestimmt hierzu, dass von jedem Verarbeitungskanal 1 und 2 aus nur die Teile des jeweils berechneten sicherheitsgerichteten Protokolls für das Bilden des gemeinsamen sicherheitsgerichteten Protokolls in die entsprechenden Speicherstellen des Zwischenspeichers 30 eingeschrieben werden kann, für die der jeweilige Mikro-Controller 11 oder 21 eine jeweilige Schreibberechtigung hat. Für jede Speicher- oder Registerstelle wird daher erfindungsgemäß nur jeweils eine Schreibberechtigung definiert.

Ausgehend von der Annahme, dass die sicheren Protokolle 14 und 24 identisch sind, umfasst also auch jedes der Protokolle die gleiche Anzahl von Bytes, bei Fig. 1 mit ByteX bis Byte X+5 gekennzeichnet. Im vorliegenden Beispiel gemäß Fig. 1 ist für den Mikro-Controller 21 des Verarbeitungskanals 2 die Schreibberechtigung für die Speicheradressen des Zwischenspeichers 30 für das Byte X, das Byte X+2 sowie für das Byte X+4 fest zugeordnet und für den Mikro-Controller 11 des Verarbeitungskanals 1 die Schreibberechtigung zum Eintragen des Bytes X+1, des Bytes X+3 und des Bytes X+5 zugeordnet. Folglich ist jedem der Mikro-Controller 11 und 21 nur eine Schreibberechtigung zum Eintragen jedes zweiten Bytes in den Zwischenspeicher 30 zugeordnet.

Ist beispielsweise X=0 und bestehen die redundanten sicherheitsgerichteten Protokolle 14 und 24 sowie das gemeinsam zu bildende identische sicherheitsgerichteten Protokoll, also das nachfolgend zu sendende Sicherheitstelegramm aus insgesamt 6 Bytes, setzen sich die Daten innerhalb der redundanten sicheren Protokolle und also auch innerhalb des zu sendenden Sicherheitstelegramms beispielsweise aus einem Header von 2 Bit, anschließenden Nutzdaten von 14 Bit, einer Adresse von 8 Bit und einer CRC-Checksumme von 24 Bit zusammen. Mit der vorstehenden, definiert zugeordneten Schreib-Zugriffsberechtigung, werden der 2 Bit umfassende Header und die ersten 6 Bit der Nutzdaten unter Bezugnahme auf Figur 1 folglich aus dem über den Verarbeitungskanal 2 berechneten, sicheren Protokoll 24, die nächsten 8 Bit Nutzdaten aus dem über den Verarbeitungskanal 1 berechneten Protokoll 14, die 8 Bit umfassende Adresse wiederum aus dem Protokolldatensatz 24, und die 24 Bit umfassende CRC-Checksumme anteilsmäßig nacheinander aus den berechneten Protokollen 14, 24 und 14 übernommen.

Als Zwischenspeicher ist somit bereits ein Standard-RAM oder bevorzugt, wie nachfolgend ersichtlich, ein Standard-DPM einsetzbar.

Selbst bei nur zweifacher Redundanz wird eine darüber hinausgehende noch erhöhte Sicherheit erreicht, wenn in weiterer in zweckmäßiger Weise die Mikro-Controller 11 und 21 beider Verarbeitungskanäle 1 und 2 den vollständigen Lesezugriff auf den Zwischenspeicher 30 zugeteilt bekommen.

Dieses ermöglicht einen einfachen Vergleich der gesamten Daten, indem zum Einen auf einfache Weise überprüfbar ist, ob das gemeinsam gebildete, als Sicherheitstelegramm zu übertragende sichere Protokoll, welches beispielsweise die Sicherheitsanforderungen für eine einfache Übertragung gemäß SIL 3 IEC 61508 erfüllt, fehlerfrei ist, und zwar durch jeweilige Verifikation gegenüber dem eigenen vorhergehend separat gebildeten sicherheitsgerichteten Protokoll 14 oder 24. Darüber hinaus ermöglicht der vollumfängliche Lesezugriff für jeden der Verarbeitungskanäle 1 und 2 die, zweckmäßigerweise bereits im Vorfeld der Steuerung/Überwachung/Regelung eines sicherheitskritischen Prozesses durchführbare Überprüfung, ob die Zugriffsregel generell fehlerfrei erfolgt. Hierzu wird insbesondere überprüft, ob die berechneten Daten eines jeweiligen Mikro-Controllers des einen und des anderen Verarbeitungskanals ausschließlich, dies aber garantiert, nur in die jeweils zugewiesenen Speicheradressen des Zwischenspeichers 30 geschrieben werden.

Führt diese "Selbstverifikation" und/oder "Kreuzverifikation" zu einem ungleichen Ergebnis, wird zwangsläufig auf Fehler erkannt und eine sicherheitsgerichtete Funktion eingeleitet.

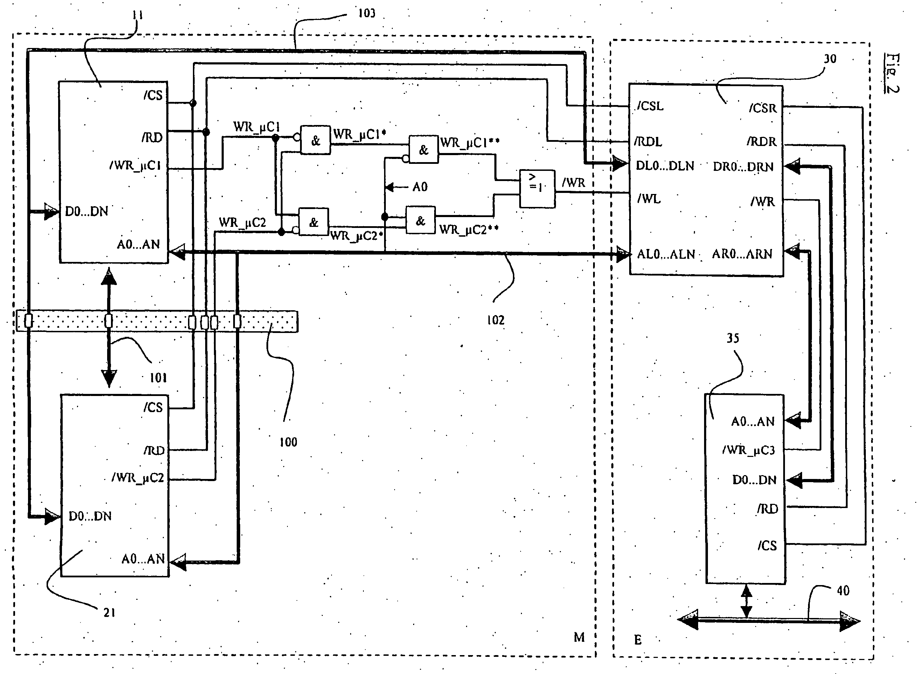

Figur 2 stellt beispielhaft, jedoch unter Verwendung von vorbeschriebener Software anstelle von Protokollchips, ein mögliches Funktionsschaltbild einer Umsetzung der in Figur 1 skizzierten Schreibberechtigung sowie der vollumfänglichen Leseberechtigung als Basis für diese Verifikationen dar.

Wie bei Figur 2 dargestellt, umfasst der links dargestellte, mit M gekennzeichnete Bereich die erfindungsgemäße mehrkanalige Architektur mit Sicherheitsbetrachtung und der bei Figur 2 mit E gekennzeichnete rechte Bereich die einkanalige Architektur mit dem als Sicherheitstelegramm zu übertragenden, gemeinsam gebildeten sicherheitsgerichteten Protokoll.

Somit im Wesentlichen basierend auf Figur 1 sind die beiden Mikro-Prozessoren 11 und 21 über an sich bekannte Art und Weise entkoppelt, bei Figur 2 mit der Bezugsziffer 100 gekennzeichnet, und ferner über eine Kommunikationsschnittstelle 101 zur zusätzlichen gegenseitigen Überprüfung der jeweils separat berechneten sicherheitsgerichteten Protokolle 14 und 24 miteinander verbunden.

Der Adressbus 102 für die Adressen Ax, mit x zwischen 0 und N, der Datenbus 103 für die Daten Dx, mit x zwischen 0 und N, sowie die Signale /CS (Chipselect) und /RD (Read) sind, wie normal üblich, direkt an das bei Figur 2 dargestellte Standard-DPM an die entsprechenden Pins für die Signale /CSL bzw. /RDL angelegt. Die Adressleitung A0 ist mit den Schreibsignalen /WR_µC1 und /WR_µC2 der Mikro-Controller 11 und 21 so verknüpft, dass bei geraden Adressen nur der Mikro-Controller 11 schreibberechtigt ist und bei ungeraden Adressen nur der Mikro-Controller 21 schreibberechtigt ist. Nur in diesen beiden Fällen kann das Schreibsignal /WR über den entsprechenden Pin für das "low aktive" Signal /WL am RAM des Standard-DPM ausgelöst werden. Lesend können jedoch beide Mikro-Controller 11 und 21 auf den gesamten Speicher 30 zugreifen.

Ein zweckmäßigerweise vor dem Schreiben des gemeinsam zu bildenden Sicherheitstelegramms durchführbarer Tests der Zugriffsverriegelung erfolgt beispielsweise nach folgendem Ablauf:

Der Mikro-Controller 11 versucht einen Defaultwert, z.B. FFh, in alle Speicherstellen des DPM 30 zu schreiben.

Der Mikro-Controller 21 versucht daraufhin einen weiteren Defaultwert, z.B. 00h, in alle Speicherstellen des DPM 30 zu schreiben.

Der Mikro-Controller 11 liest daraufhin alle Speicherstellen des DPM 30 aus und prüft, ob nur in den, dem Mikro-Controller 21 zugewiesenen Speicherstellen der Wert 00h eingetragen ist und ggfs., ob in den dem Mikro-Controller 11 zugewiesenen Speicherstellen der Wert FFh eingetragen ist. Anschließend versucht der Mikro-Controller 11 noch einmal den Wert FFh in alle Speicherstellen zu schreiben.

Daraufhin liest der Mikro-Controller 21 alle Speicherstellen des DPM 30 aus und prüft, ob nur in den, dem Mikro-Controller 11 zugewiesenen Speicherstellen der Wert FFh eingetragen ist und ggfs., ob in den dem Mikro-Controller 21 zugewiesenen Speicherstellen der Wert 00h eingetragen ist.

Tritt bei dieser Erwartungshaltung ein Fehler auf, so wird der Fehler erkannt und eine sicherheitsgerichtete Funktion eingeleitet, z.B. der Prozess in einen sicheren Zustand überführt. Anderenfalls kann davon ausgegangen werden, dass die Zugriffsverriegelung einwandfrei funktioniert. Ein wesentliches Merkmal bei der erfindungsgemäßen Realisierung ist somit, dass nicht die eigentlichen Schreibsignale vom jeweiligen Mikro-Controller 11 bzw. 21 direkt genutzt werden sondern, dass eine Verknüpfung mit den Adressen stattfindet. Somit kann nur auf den Adressen geschrieben werden, die dem jeweiligen Mikro-Controller zugeordnet sind.

Die Daten, die im RAM des DPM 30 abgelegt werden, sind folglich über ein in höchstem Maße sicheres Protokoll gesichert. Das DPM 30 wird ähnlich wie der Übertragungskanal selbst, als nicht sicher angesehen. Die Sicherheit wird somit unter Anderem dadurch erreicht, dass auf der verarbeitenden Seite, also in dem bei Figur 2 mit M gekennzeichneten Bereich, eine Erwartungshaltung an den Aufbau bzw. den Inhalt der Daten besteht. Folglich kann die weitere Verarbeitung oder Verteilung der im DPM 30 zwischengespeicherten Daten beispielsweise über einen weiteren Mikro-Controller 35, der die Daten aus dem DPM 30 einkanalig übernimmt, erfolgen und anschließend an das Bussystem, beispielsweise durch Einkopplung in einen Feldbus 40, übergeben werden.

Durch das Durchführen einer Selbstverifikation überwachen somit beide Mikro-Controller 11 und 21 die jeweilige Zugriffsregel praktisch während des Hineinschreibens des Sicherheitstelegramms in den Zwischenspeicher 30 selbsttätig und die in dem Speicher abgelegten Daten können über eine Schnittstelle des Zwischenspeichers 30 zur Übertragung an einen Protokollchip, einen weiteren Mikro-Controller oder eine sonstige intelligenten Einheit einkanalige übergeben werden. Da beim Ausfall oder Fehler eines Mikro-Controllers 11 oder 21 kein vollständiges Sicherheitstelegramm mehr erzeugt werden kann, wird zwangsläufig auf Fehler erkannt und eine sicherheitsgerichtete Funktion ausgelöst. Die Sicherheitsbetrachtung der redundanten Architektur M endet somit mit dem Ablegen der Daten auf den Speicher 30. Ab hier greift der Sicherungsmechanismus des Protokolls, denn die ab hier möglichen Fehler werden für eine Übertragung sowieso wie bisher betrachtet und müssen beherrscht werden. Ein hierfür in Betracht kommender Fehler aus dem Grundsatz für die Prüfung und Zertifizierung von "Bussystemen für die Übertragung sicherheitsrelevanter Nachrichten" ist eine Nachrichtenverfälschung.

Durch die vorstehend aufgezeigte unbedingte Verknüpfung der Schreibberechtigung mit der zu beschreibenden Positionen im gemeinsam zu bildenden sicheren Protokoll und der uneingeschränkten Leseberechtigung beider Mikro-Controller ist somit bereits durch Verwendung von Standardkomponenten der Vergleich bzw. die Verifizierung des zu sendenden Sicherheitstelegramms vor der eigentlichen Übertragung über einen Bus 40 gewährleistet. Folglich ist ein Mikro-Controller 11 bzw. 21 alleine nicht in der Lage, ein Sicherheitstelegramm zu senden.

Das bei Figur 2 dargestellte Funktionsschaltbild ist somit bereits durch eine einfache Logikschaltung realisierbar, kann jedoch beispielsweise auch durch ein FPGA realisiert sein. Ferner ist selbstverständlich anstelle des bei Figur 2 dargestellten DPM 30 auch ein einfaches Standard-RAM eingesetzbar. Durch das eingesetzte DPM vereinfacht sich jedoch die Schaltung hinsichtlich des Auslesens der Sicherheitstelegramms aus dem Zwischenspeicher. Für einen Fachmann ist es ersichtlich, dass die bei Fig. 2 dargestellte Schaltungsanordnung nur eine der möglichen technischen Umsetzung für eine eindeutige Schreib-Zugriffsberechtigung darstellt. Die Datenleitungen können z.B. auch so aufgeteilt sein, dass ein Rechner nur auf die oberen Datenleitungen und ein redundanter Rechner lediglich auf die unteren Datenleitungen des Zwischenspeichers schreibend zugreifen kann. Eine Schreib-Zugriffregel gemäß der Erfindung ist ferner für mehr als nur zwei redundante Rechner/Verarbeitungskanäle anwendbar.

## Patentansprüche

1. Verfahren zur einkanaligen Busankopplung eines sicherheitskritischen Prozesses, bei welchem
ein für den sicherheitskritischen Prozess relevanter Datensatz über zumindest zwei redundante Verarbeitungskanäle (1, 2) protokollspezifisch nach identischen Gesetzmäßigkeiten zu jeweils einem sicheren Protokoll (14, 24) verarbeitet wird **dadurch gekennzeichnet, dass**
die redundanten sicheren Protokolle (14, 24) zur einkanaligen Busankopplung zu einem gemeinsamen sicheren Protokoll zusammengesetzt werden, und zwar indem von jedem der Verarbeitungskanäle (1, 2) auf ein gemeinsames Zwischenregister (30) zugegriffen wird, wobei für jede Registerstelle eine Schreibberechtigung nur einmal vergeben wird, derart dass das gemeinsame sichere Protokoll anteilig durch Einschreiben jeweils unterschiedlicher Anteile der jeweiligen sicheren Protokolle zusammengesetzt wird.

2. Verfahren nach vorstehendem Anspruch, ferner **dadurch gekennzeichnet, dass** vor einer Übergabe des gemeinsamen sicheren Protokolls aus dem Zwischenregister (30) an den Bus (40) zur Verifikation des gemeinsam gebildeten sicheren Protokolls von jedem der redundanten Verarbeitungskanäle (1, 2) der Inhalt jeder Registerstelle des Zwischenregisters (30) gelesen wird.

3. Verfahren nach einem der vorstehenden Ansprüche, ferner **dadurch gekennzeichnet, dass** vor dem Schreiben des gemeinsamen sicheren Protokolls die redundant gebildeten sicheren Protokolle (14, 24) durch die Verarbeitungskanäle (1, 2) auf gegenseitige Identität überprüft werden.

4. Verfahren nach einem der vorstehenden Ansprüche, ferner **dadurch gekennzeichnet, dass** zur Verifikation einer eindeutig zugeordneten Schreibberechtigung eine Testprozedur durchlaufen wird.

5. Verfahren nach vorstehendem Anspruch, ferner **dadurch gekennzeichnet, dass** bei der Testprozedur über jeden der Verarbeitungskanäle (1, 2) versucht wird, einen jeweils unterschiedlichen, spezifisch zugeordneten Defaultwert in alle Registerstellen des Zwischenregisters (30) zu schreiben und anschließend über jeden der Verarbeitungskanäle (1, 2) alle Registerstellen des Zwischenregisters (30) ausgelesen werden und die Inhalte der Registerstellen auf eine eindeutige Verschachtelung hin verifiziert werden.

6. Verfahren nach vorstehendem Anspruch, ferner **dadurch gekennzeichnet, dass** die Testprozedur mehrmalig und/oder ein abwechselndes Schreiben und Lesen der Registerstellen über unterschiedliche Verarbeitungskanäle (1, 2) durchgeführt wird.

7. Verfahren nach vorstehendem Anspruch, ferner **dadurch gekennzeichnet, dass** als Zwischenregister (30) ein Standard-Ram oder ein Standard-DPM verwendet wird.

8. Verfahren nach einem der vorstehenden Ansprüche, ferner **dadurch gekennzeichnet, dass** das gemeinsame *sichere* Protokoll aus dem Zwischenregister (30) einkanalig an eine anwendungsspezifisch ausgebildete Busankopplungseinrichtung (35) übergeben wird.

9. Vorrichtung zur einkanaligen Busankopplung eines sicherheitskritischen Prozesses, umfassend
wenigstens zwei redundante Rechner (11, 21) zum protokollspezifischen Verarbeiten eines identischen Eingangsdatensatzes unter Anwendung identischer Gesetzmäßigkeiten zu jeweils einem sicheren Protokoll (14, 24), und
**gekennzeichnet durch**
eine Schaltungsanordnung zum Verbinden jedes Rechners (11, 21) mit einem gemeinsamen Zwischenregister (30) derart, dass zur gemeinsamen Bildung eines weiteren identischen, gemeinsamen sicheren Protokolls für jede Registerstelle des Zwischenregisters (30) eine Schreib-Zugriffsmöglichkeit nur für jeweils einen der Rechner gegeben ist, so dass das gemeinsame sichere Protokoll anteilig durch Einschreiben jeweils unterschiedlichen Anteile der jeweiligen sicheren Protokolle Züsammergesekt wird.

10. Vorrichtung nach vorstehendem Anspruch, ferner **dadurch gekennzeichnet, dass** die Schaltungsanordnung derart ausgebildet ist, das für jede Registerstelle des Zwischenregisters (30) eine Lese-Zugriffsmöglichkeit für jeden der Rechner (11, 21) gegeben ist.

11. Vorrichtung nach einem der vorstehenden Ansprüche, ferner **dadurch gekennzeichnet, dass** die Rechner (11, 21) über eine Kommunikationsschnittstelle (101) mit einander verbunden sind.

12. Vorrichtung nach einem der vorstehenden Ansprüche, ferner **dadurch gekennzeichnet, dass** die Rechner (11, 21) jeweils einen integrierten Protokollchip umfassen oder ausgangseitig mit einen Protokollchip (13, 23) verbunden sind oder eine die Funktion des Protokollchips bereitstellende Software umfassen.

13. Vorrichtung nach einem der vorstehenden Ansprüche, ferner **dadurch gekennzeichnet, dass** die Vorrichtung als Busteilnehmereinheit ausgebildet ist und die Rechner eingangsseitig wenigstens mit Eingangskanälen zur Anbindung von Prozessdaten-Eingabeeinheiten verschaltet oder, dass die Vorrichtung als Bus-Steuerungseinheit ausgebildet ist.

14. Vorrichtung nach einem der vorstehenden Ansprüche, dass die Schaltungsanordnung in einfacher Logik oder als FPGA ausgebildet ist.

15. Vorrichtung nach vorstehendem Anspruch, ferner **dadurch gekennzeichnet, dass** das Zwischenregister (30) ein Standard-Ram oder ein Standard-DPM ist.

16. Vorrichtung nach einem der vorstehenden Ansprüche, ferner **dadurch gekennzeichnet, dass** das Zwischenregister (30) eine Schnittstelle zur direkten einkanaligen Busankopplung oder zur einkanaligen Anbindung an eine anwendungsspezifisch ausgebildete Busankopplungseinrichtung (35) aufweist.

## Claims

1. Method for single-channel bus coupling of a safety-critical process, wherein
a data record which is relevant to the safety-critical process is processed using at least two redundant processing channels (1, 2) in a protocol-specific way according to identical laws to form a safe protocol (14, 24) in each case,
**characterised in that**
the redundant safe protocols (14,25), for single-channel bus coupling, are put together to form a common safe protocol, and indeed **in that** a common intermediate register (30) is accessed by each of the processing channels (1, 2), whereby a write permission is only allocated once for each register location in such a way that the common safe protocol is put together in portions by writing in different portions of the respective safe protocols.

2. Method according to the preceding claim, further **characterised in that** before transmission of the common safe protocol from the intermediate register (30) to the bus (40), the content of each register location of the intermediate register (30) is read by each of the redundant processing channels (1,2) in order to check the common safe protocol.

3. Method according to one of the preceding claims, further **characterised in that** before the writing of the common safe protocol the redundantly formed safe protocols (14, 24) are checked by the processing channels (1, 2) to ascertain whether they are identical.

4. Method according to one of the preceding claims further **characterised in that** a test procedure is carried out in order to verify a clearly assigned write permission.

5. Method according to the preceding claim, further **characterised in that** during the test procedure an attempt is made using each of the processing channels (1, 2) to write a different, specifically assigned default value into all register locations of the intermediate register (30) and all register locations of the intermediate register (30) are subsequently read using each of the processing channels (1, 2) and the contents of the register locations are checked for clear nesting.

6. Method according to the preceding claim, further **characterised in that** the test procedure is carried out several times and/or an alternate writing and reading of the register locations is carried out using different processing channels (1,2).

7. Method according to the preceding claim further **characterised in that** a standard RAM or a standard DPM is used as the intermediate register (30).

8. Method according to one of the preceding claims, further **characterised in that** the common safe protocol is transmitted from the intermediate register (30) using a single channel to a user-specifically formed bus coupling device (35).

9. Device for single-channel bus coupling of a safety-critical process, comprising:
at least two redundant computers (11, 21) for the protocol-specific processing of an identical input data record using identical laws to form one safe protocol (14, 24), and **characterised by**
a circuit arrangement for connecting each computer (1 1,21) to a common intermediate register (30) in such a way that a write access facility is only allocated for one of the computers in each case for the purpose of the common formation of a further identical, common, safe protocol for each register location of the intermediate register (30), in such a way that the common safe protocol is put together in portions by writing in different portions of the respective safe protocols.

10. Device according to the preceding claim, further **characterised in that** the circuit arrangement is formed in such a way that a read access facility is given for each of the computers (11, 21) for each register location of the intermediate register (30).

11. Device according to one of the preceding claims further **characterised in that** the computers (11, 21) are connected to each other by means of a communication interface (101).

12. Device according to one of the preceding claims further **characterised in that** the computers (11, 21) each comprise an integrated protocol chip or are connected on the output side to a protocol chip (13, 23) or comprise software implementing the function of the protocol chip.

13. Device according to one of the preceding claims further **characterised in that** the device is formed as a bus subscriber unit and the computers are connected on the input side at least to input channels for connecting process data input units or **in that** the device is formed as a bus control unit.

14. Device according to one of the preceding claims **characterised in that** the circuit arrangement is formed in simple logic or as a FPGA.

15. Device according to the preceding claim further **characterised in that** the intermediate register (30) is a standard RAM or a standard DPM.

16. Device according to one of the preceding claims further **characterised in that** the intermediate register (30) comprises an interface for direct single-channel bus coupling or for single-channel connection to a user-specifically formed bus coupling device (35).

## Revendications

1. Procédé pour le rattachement au bus monocanal d'un processus critique en matière de sécurité, dans lequel un ensemble de données relatif au processus critique en matière de sécurité est traité au moyen d'au moins deux canaux de traitement (1,2) redondants de façon spécifique au protocole selon des lois générales identiques pour former respectivement un protocole (14, 24) sûr, **caractérisé en ce que** les protocoles (14, 24) sûrs et redondants sont assemblés pour le rattachement à un bus monocanal pour former un protocole sûr commun, et ce du fait que chacun des canaux de traitement (1, 2) recourt à un registre intermédiaire (30) commun, une autorisation d'écriture étant attribuée seulement une fois pour chaque point de registre de telle sorte que le protocole sûr commun est établi au prorata par recommandé de respectivement diverses fractions des protocoles sûrs respectifs.

2. Procédé selon la revendication précédente, caractérisé également en ce que, avant un transfert du protocole sûr commun du registre intermédiaire (30) au bus (40), le contenu de chaque point de registre du registre intermédiaire (30) est lu pour la vérification du protocole sûr formé en commun par chacun des canaux de traitement (1, 2) redondants.

3. Procédé selon l'une quelconque des revendications précédentes, caractérisé également en ce que, avant l'écriture du protocole sûr commun, les protocoles (14, 24) sûrs formés de façon redondante sont contrôlés par les canaux de traitement (1, 2) au niveau de l'identité réciproque.

4. Procédé selon l'une quelconque des revendications précédentes, caractérisé également en ce qu'une procédure de test est parcourue pour la vérification d'une autorisation d'écriture clairement attribuée.

5. Procédé selon la revendication précédente, **carac**térisé également en ce que, lors de la procédure de test, on tente par chacun des canaux de traitement (1, 2) d'écrire une valeur de défaut respectivement différente et attribuée de façon spécifique dans tous les points de registre du registre intermédiaire (30) et ensuite tous les points de registre du registre intermédiaire (30) sont lus par chacun des canaux de traitement (1,2) et les contenus des points de registre sont vérifiés en ce qui concerne une imbrication claire.

6. Procédé selon la revendication précédente, **carac**térisé également en ce que la procédure de test est répétée plusieurs fois et/ou une écriture et une lecture alternatives des points de registre sont effectuées au moyen de différents canaux de traitement (1, 2).

7. Procédé selon la revendication précédente, **carac**térisé également en ce qu'une RAM standard ou un DPM standard est utilisé comme registre intermédiaire (30).

8. Procédé selon l'une quelconque des revendications précédentes, caractérisé également en ce que le protocole sûr commun provenant du registre intermédiaire (30) est transféré par un seul canal à un dispositif de rattachement au bus (35) réalisé de façon spécifique à l'application.

9. Dispositif pour le rattachement au bus monocanal d'un processus critique en matière de sécurité, comprenant au moins deux ordinateurs (11,21) redondants pour le traitement spécifique au protocole d'un ensemble de données d'entrée identique avec l'application de lois générales identiques pour respectivement un protocole (14, 24) sûr et **caractérisé par**
un agencement de circuit pour relier chaque ordinateur (11, 21) avec un registre intermédiaire (30) commun de telle sorte que, pour la formation commune d'un autre protocole identique, sûr et commun pour chaque point de registre du registre intermédiaire (30), une possibilité pour l'accès à l'écriture est donnée uniquement pour respectivement l'un des ordinateurs de telle sorte que le protocole sûr commun est établi au prorata par recommandé de respectivement diverses fractions des protocoles sûrs respectifs.

10. Dispositif selon la revendication précédente, **carac**térisé également en ce que l'agencement de circuit est réalisé de telle sorte que, pour chaque point de registre du registre intermédiaire (30), on a une possibilité pour l'accès à la lecture pour chacun des ordinateurs (11, 21).

11. Dispositif selon l'une quelconque des revendications précédentes, caractérisé également en ce que les ordinateurs (11, 21) sont reliés entre eux au moyen d'une interface de communication (101).

12. Dispositif selon l'une quelconque des revendications précédentes, caractérisé également en ce que les ordinateurs (11,21) comprennent chacun une puce de protocole intégrée ou sont reliés côté sortie à une puce de protocole (13, 23) ou comprennent un logiciel qui met à disposition la fonction de la puce de protocole.

13. Dispositif selon l'une quelconque des revendications précédentes, caractérisé également en ce que le dispositif est conçu comme unité d'abonné de bus et les ordinateurs sont connectés côté entrée au moins avec des canaux d'entrée pour le rattachement d'unités d'entrée de données de processus ou en ce que le dispositif est conçu comme unité de commande de bus.

14. Dispositif selon l'une quelconque des revendications précédentes, **caractérisé en ce que** l'agencement de circuit est réalisé dans une logique simple ou sous forme de FPGA.

15. Dispositif selon la revendication précédente, **carac**térisé également en ce que le registre intermédiaire (30) est une RAM standard ou un DPM standard.

16. Dispositif selon l'une quelconque des revendications précédentes, caractérisé également en ce que le registre intermédiaire (30) présente une interface pour le rattachement direct monocanal à un bus ou pour le rattachement monocanal à un dispositif de rattachement de bus (35) conçu de façon spécifique à l'application.
